# FASCICULE DE BREVET EUROPEEN

(11) **EP 3 412 876 B1**
(45) Date de publication et mention de la délivrance du brevet: **22.04.2020**
(21) Numéro de dépôt: 18173283.5
(22) Date de dépôt: 18.05.2018
(51) Int. Cl.: F04D 29/56, F04D 27/02, F02C 7/047, F02C 9/20, F01D 17/16

(54) **COMPRESSEUR A GÉOMÉTRIE VARIABLE DE TURBOMACHINE AXIALE**
KOMPRESSOR MIT VARIABLER GEOMETRIE EINER AXIALEN STRÖMUNGSMASCHINE
VARIABLE GEOMETRY COMPRESSOR OF AXIAL TURBINE ENGINE

(30) Priorité: 09.06.2017 BE 201705413
(43) Date de publication de la demande: 12.12.2018
(73) Titulaire: Safran Aero Boosters SA, 4041 Herstal (BE)
(72) Inventeur: PRINCIVALLE, Rémy, 4684 Haccourt (BE)
(74) Mandataire: Lecomte & Partners

(56) Documents cités:
- EP-A1- 1 566 522
- EP-A2- 2 148 044
- WO-A1-2006/059972
- FR-A1- 2 962 489
- US-B1- 8 452 516

## Description

### Domaine technique

L'invention se rapporte au domaine des redresseurs à géométrie variable pour compresseur de turbomachine. L'invention a également trait à une turbomachine axiale, notamment un turboréacteur d'avion ou un turbopropulseur d'aéronef.

### Technique antérieure

L'ajout de rangées d'aubes à calage variable, également désignées « aubes à orientation pilotée », permet d'augmenter l'opérabilité à régime partiel dans un compresseur. En effet, la marge au pompage est augmentée pour certains régimes moteur. Ainsi, la tendance actuelle consiste à ajouter des rangées d'aubes à calage variable à chaque niveau de compression.

Le document US 2014/0130513 A1 divulgue un compresseur de turbomachine axiale. Ce compresseur compact présente deux niveaux de compression, chacun avec un redresseur suivi d'une rangée d'aubes rotoriques. Les redresseurs comportent des aubes à calage variable qui permettent de s'adapter à différents régimes moteur. Toutefois cette architecture de compresseur présente des performances perfectibles. En particulier, chaque rangée diminue le débit et le rendement du compresseur. Un autre tel compresseur est divulgué par le document WO 2006/059972 A1 ou le document US 8,452,516 B1.

### Résumé de l'invention

### Problème technique

L'invention a pour objectif de résoudre au moins un des problèmes posés par l'art antérieur. Plus précisément, l'invention a pour objectif d'optimiser la compacité du compresseur. L'invention aspire également à augmenter les performances du compresseur tout en préservant la marge d'opérabilité. L'invention a également pour objectif de proposer une solution simple, résistante, légère, économique, fiable, facile à produire, commode d'entretien, et d'inspection aisée.

### Solution technique

L'invention a pour objet un compresseur selon la revendication 1. Certains modes de réalisation préférentielles sont définis par les revendications dépendantes.

L'invention a également pour un objet un turboréacteur selon la revendication 12, préférentiellement selon la revendication 13.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire soit explicitement précisé.

### Avantages apportés

L'invention permet d'augmenter le débit et le taux de compression du compresseur tout en préservant la marge au pompage. Ces bénéfices sont apportés au régime nominal du compresseur comme pour des régimes transitoires, c'est-à-dire à des vitesses de rotations inférieures à celles du régime nominal. Concrètement, au régime nominal du compresseur le flux s'écoule de 0,8 Mach à 1,2 Mach.

L'invention offre un bénéfice significatif.

L'architecture selon l'invention optimise la compacité par rapport à chaque paramètre choisi parmi le débit, le taux de compression, la marge au pompage. La compacité est améliorée au travers des brides, du système de dégivrage, de l'agencement des rangées d'aubes, et du bec.

### Brève description des dessins

La figure 1 représente une turbomachine axiale selon l'invention.
La figure 2 est un schéma d'un compresseur de turbomachine selon un premier exemple non revendiqué.
La figure 3 est un schéma d'un compresseur de turbomachine selon un mode de réalisation de l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

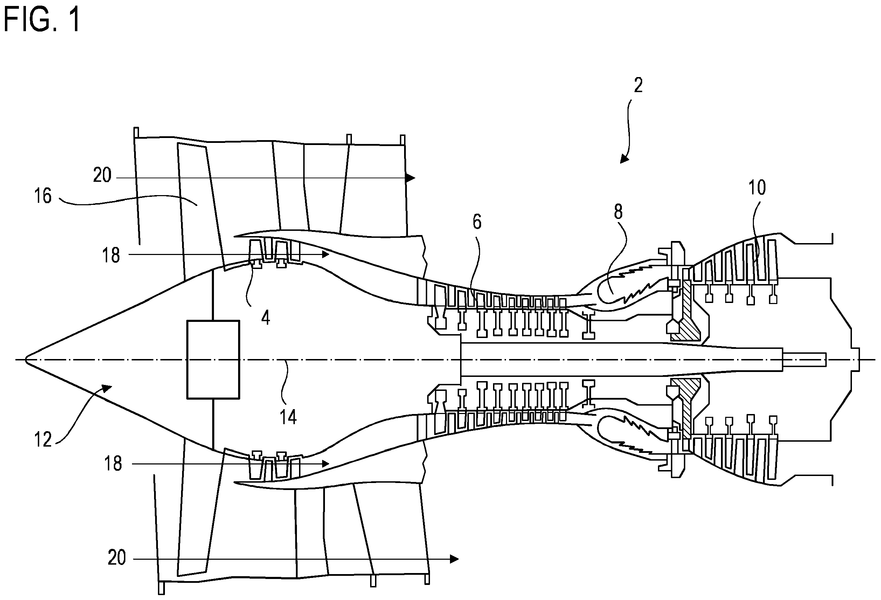

La figure 1 représente de manière simplifiée un premier exemple non revendiqué d'une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine. La soufflante peut être du type non carénée, par exemple à double rotors contrarotatifs, éventuellement en moitié aval.

Des moyens de démultiplication, tel un réducteur épicycloïdal, peut réduire la vitesse de rotation de la soufflante et/ou du compresseur basse-pression 4 par rapport à la turbine associée et/ou par rapport à la soufflante 16. Le flux secondaire 20 peut être accéléré de sorte à générer une réaction de poussée nécessaire au vol d'un avion. Les flux primaire 18 et secondaire 20 sont annulaires, coaxiaux et emmanchés l'un dans l'autre. Ils sont canalisés par le carter de la turbomachine et/ou par des viroles.

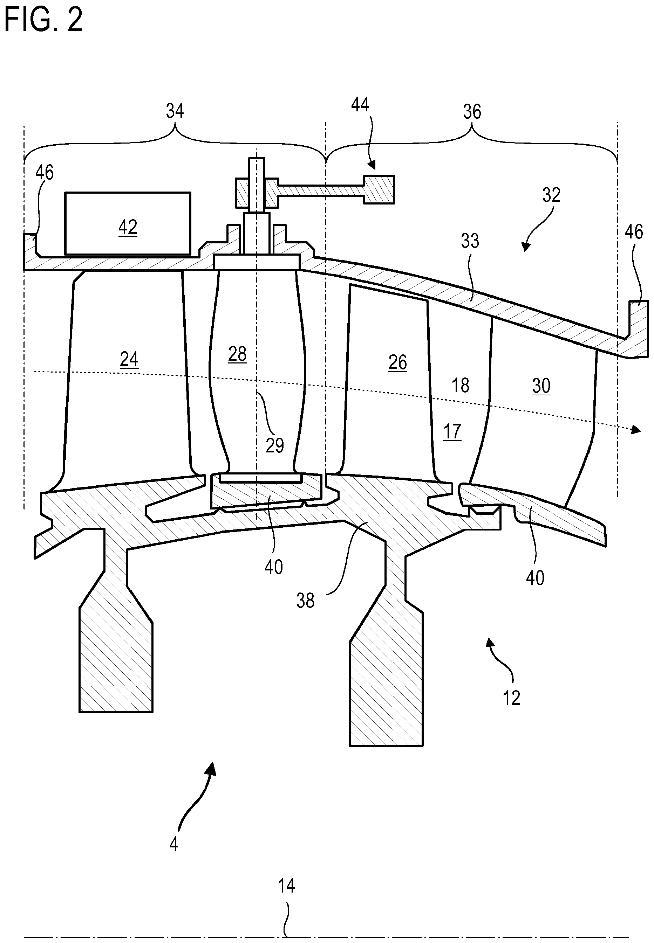

La figure 2 est une vue en coupe d'un compresseur d'une turbomachine axiale telle que celle de la figure 1. Le compresseur peut être un compresseur basse-pression 4.

Le rotor 12 comprend plusieurs rangées d'aubes rotoriques (24; 26), en l'occurrence deux, il pourrait par exemple en comprendre trois. Le rotor 12 peut être un tambour monobloc aubagé, ou comprendre des aubes à fixation par queue d'aronde.

Le compresseur basse-pression 4 comprend plusieurs redresseurs, en l'occurrence deux, qui contiennent chacun une rangée d'aubes statoriques (28 ; 30). Les redresseurs sont chacun associé à une rangée d'aubes rotoriques pour redresser le flux d'air, de sorte à convertir la vitesse du flux en pression, notamment en pression statique.

Les aubes statoriques (28 ; 30) sont liées au carter annulaire externe 32 du compresseur qui délimite par ailleurs la veine 17, notamment la veine primaire, que traverse axialement le flux primaire 18. Le compresseur 4 est axial puisque son entrée comme sa sortie sont axiales, et que le flux primaire 18 le traverse essentiellement axialement ; c'est-à-dire plus axialement que radialement.

Le carter externe 32 peut comprendre une paroi 33 de forme arquée. La paroi 33 peut être monobloc et s'étendre de l'entrée à la sortie du compresseur 4. La paroi 33 peut comprendre une bride annulaire de fixation 46 en entrée et/ou en sortie du compresseur 4.

La paroi 33 peut s'étendre sur la majorité ou la totalité de la longueur axiale du compresseur 4 et/ou du carter 32. La paroi y gagne en compacité puisque les moyens de fixation peuvent être allégés.

Les brides 46 peuvent être les uniques brides annulaires du carter 32. Cet agencement des brides 46 optimise la compacité car elle libère de la place pour le montage des aubes. La paroi 33 peut être formée de demi-coquilles.

Les aubes s'étendent essentiellement radialement. Chaque aube (24 ; 26 ; 28 ; 30) traverse la majorité de la hauteur ou de l'épaisseur radiale de la veine 17. Eventuellement, elles traversent radialement toute la veine 17. Les aubes statoriques (28 ; 30) peuvent joindre les deux surfaces annulaires de la veine 17. Les aubes rotoriques (24; 26) peuvent s'étendre depuis une surface annulaire de la veine 17, et effleurer la surface annulaire radialement opposée de la veine 17.

Grâce à ses rangées d'aubes (26-30), le compresseur forme deux niveaux de compression, dont un niveau amont 34 et un niveau aval 36. Ces niveaux sont formés grâce à l'alternance des rangées d'aubes rotoriques et statoriques.

Le compresseur 4 peut être mixte. Il peut à la fois comprendre des aubes statoriques à orientation réglable 28, et des aubes statoriques à orientation fixe 30; c'est à dire verrouillées par rapport au carter 32. Les premières sont en amont, notamment dans le niveau amont 34, les deuxièmes sont en aval, notamment dans le niveau aval 36.

Les aubes statoriques à orientation réglable 28 peuvent pivoter sur elles-mêmes, par exemple selon un axe de pivotement 29 généralement radial. Elles sont également connues sous l'acronyme « VSV » correspondant à l'expression anglo-saxonne « Variable-Stator-Vane ». Une telle aube 28 présente une corde dont l'inclinaison par rapport à l'axe de rotation 14 peut varier. Ainsi, l'aube 28 peut intercepter plus ou moins le flux primaire 18. La composante circonférentielle de ce dernier peut être réduite pour différents régimes tout en préservant le rendement. Le redressement peut être adapté aux conditions de fonctionnement.

Eventuellement, le compresseur 4 comprend une unique rangée annulaire d'aubes réglables 28, par exemple disposées entre les deux rangées d'aubes rotoriques (24; 26).

Le rotor 12 peut être formé par un tambour 38 portant les aubes rotoriques (24 ; 26). Ce tambour 38 peut s'étendre sur la majorité de la longueur du compresseur 4 éventuellement toute la longueur puisqu'il porte la rangée d'aubes 24 en entrée, et qu'il assure une étanchéité avec la virole interne 40 de la rangée aval, par exemple la rangée d'aubes statoriques 30 du niveau aval 36.

En complément, le compresseur 4 présente un système de dégivrage 42. Ce système de dégivrage 42 peut être monté sur le carter 32. Le système de dégivrage 42 peut être au niveau axialement des aubes rotoriques 24 du niveau amont 34. Il peut être placé en amont de la rangée annulaire d'aubes réglables 28, et notamment en amont du dispositif d'actionnement 44 des aubes réglables 28. Le carter 32 peut être intercalé radialement entre le système 42 et les aubes rotoriques 24 du niveau amont 34.

Un tel dispositif d'actionnement 44 peut comporter des leviers de commande reliés à une bague de synchronisation (non représentée). L'implantation du système de dégivrage 42 permet de gagner en compacité puisqu'elle exploite une zone peu utilisée du compresseur. L'avantage augmente lorsque le système est placé en moitié amont du compresseur.

Le système de dégivrage 42 peut prévenir la formation de givre en entrée du compresseur, et éventuellement sur les aubes 28 ; 26 et 30 vers l'aval respectivement. Il évite la formation de givre pénalisant le rendement et le débit. Il peut être chauffant, par exemple électrique ou à gaz chaud.

Le compresseur 4 peut être transsonique. Le flux 18 peut le traverser à une vitesse comprise entre 0,80 et 1,20 Mach. Les profils de ses aubes et/ou le dispositif d'actionnement 44 peuvent être configurés à cet effet. La vitesse de rotation du rotor 12 peut être supérieure ou égale à : 8000 tr/min, ou 16000 tr/min.

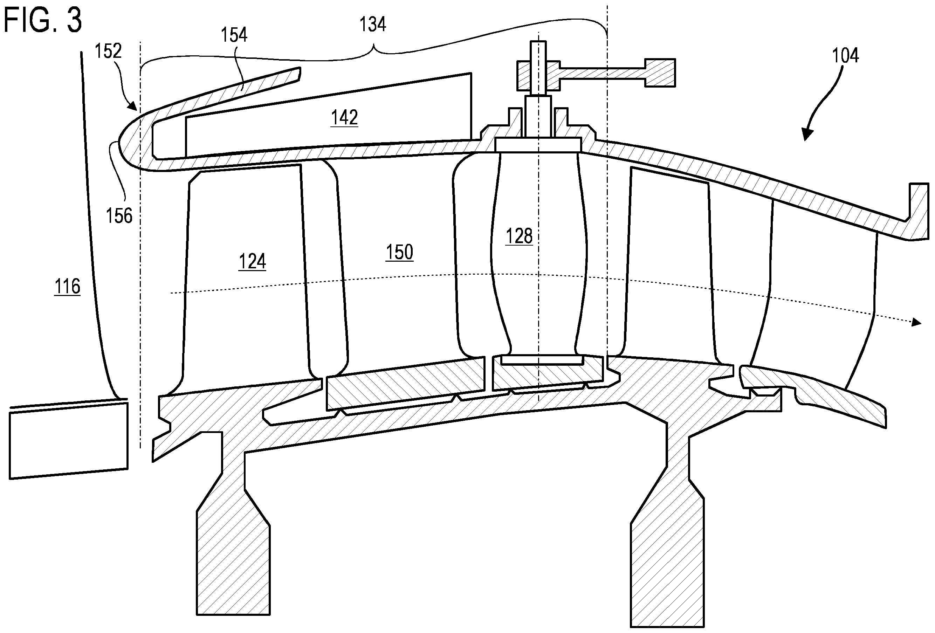

La figure 3 représente un compresseur 104 selon un mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation. Le présent compresseur 104 peut être intégré dans la turbomachine présentée en relation avec la figure 1. Le compresseur peut être un compresseur basse-pression 104.

Ce compresseur 104 est sensiblement identique à celui du premier exemple non revendiqué, il en diffère toutefois en ce que dans le premier niveau de compression 134, une rangée annulaire d'aubes statoriques 150 est intercalée entre la rangée rotorique 124 et la rangée réglable 128. Ainsi, le premier niveau de compression 134 est constitué de trois rangées annulaires d'aubes statorique. Le compresseur 104 comporte alors cinq rangées d'aubes.

Le système de dégivrage 142 peut être au niveau axialement des aubes réglables 128 et/ou des aubes statoriques 150 du premier niveau 134. Le système 142 peut prévenir la formation de givre au niveau et sur les surfaces intrados et extrados de ces aubes statoriques 150.

La soufflante 116 est disposée axialement en regard de la rangée annulaire d'aubes rotoriques 124 du niveau de compression amont 134. Un gain de place axial est ainsi permis. La soufflante 116 peut être contrarotative par rapport aux aubes rotorique 124 en amont et/ou par rapport au rotor. La vitesse de rotation de ces dernières aubes 124 peut être supérieure ou égale : au double, ou au quadruple de la vitesse de rotation de la soufflante 116. L'augmentation de vitesse de rotation du compresseur 104 autorise une diminution de taille.

Optionnellement, le compresseur 104 comprend un bec de séparation 152. Il peut en former l'entrée. Le bec de séparation 152 peut comprendre une cloison de séparation 154 avec un bord de séparation 156 en amont. La rangée annulaire d'aubes rotoriques 124 du niveau de compression amont 134 peut être disposée à l'intérieur du bec de séparation 152, notamment à l'intérieur de la cloison de séparation 154. Le bord de séparation 156 peut être placé en amont desdites aubes rotoriques 124, notamment à une position intercalaire axialement entre la soufflante 116 et lesdites aubes rotoriques 124.

## Revendications

1. Compresseur (104) de turbomachine axiale (2), le compresseur (104) comprenant une veine annulaire (17), un carter annulaire (32) délimitant la veine annulaire (17), et deux niveaux de compression (134) formés à l'intérieur de la veine annulaire (17), dont un niveau de compression amont (134) avec une rangée annulaire d'aubes (128) à orientation réglable reliées au carter annulaire (32),
le compresseur comprenant une rangée annulaire d'aubes aval formée par des aubes statoriques à orientation fixe, lesdites aubes formant la sortie du compresseur (4 ; 104), le compresseur comprenant un bec de séparation (152) et étant
**caractérisé en ce que**
le niveau de compression amont (134) comporte une rangée annulaire d'aubes rotoriques (124) disposée en amont des aubes (28; 128) à orientation réglable dudit niveau (134) et une rangée annulaire d'aubes statoriques (150) à orientation fixe disposée entre les aubes rotoriques (124) et les aubes à orientation réglable (128),
le compresseur comprenant exactement cinq rangées d'aubes (124 ; 128 ; 150), et
la rangée annulaire d'aubes rotoriques (124) du niveau de compression amont (134) étant disposée à l'intérieur du bec de séparation (152) de telle manière que le bec de séparation (152) comprend une cloison de séparation (154) et un bord de séparation (156) et que la rangée annulaire d'aubes rotoriques (124) est la première rangée d'aubes en aval du bord de séparation (156).

2. Compresseur (104) selon la revendication 1, **caractérisé en ce que** la rangée annulaire d'aubes rotoriques (124) est une première rangée rotorique, le compresseur (4 ; 104) comprenant au plus une autre rangée annulaire d'aubes rotoriques.

3. Compresseur (104) selon l'une des revendications 1 ou 2, **caractérisé en ce qu'**il comprend un rotor (12) avec un tambour (38) aubagé s'étendant axialement le long de chacune des rangées d'aubes (124 ; 128 ; 150) du compresseur (104).

4. Compresseur (104) selon la revendication 3, **caractérisé en ce que** le tambour (38) est monobloc.

5. Compresseur (104) selon l'une des revendications 3 ou 4, **caractérisé en ce que** le tambour (38) s'étend sur la majorité de la longueur axiale du compresseur, notamment du carter annulaire (32).

6. Compresseur (104) selon l'une des revendications 1 à 5, **caractérisé en ce qu'**il est un compresseur (4 ; 104) transsonique.

7. Compresseur (104) selon l'une des revendications 1 à 6, **caractérisé en ce qu'**il est un compresseur basse-pression (4 ; 104).

8. Compresseur (104) selon la revendication 7, **caractérisé en ce que** lesdites aubes (24 ; 26 ; 28 ; 30 ; 124 ; 128 ; 130) traversent radialement la veine annulaire (17).

9. Compresseur (104) selon l'une des revendications 1 à 8, **caractérisé en ce qu'**il comprend un système de dégivrage (142) disposé axialement au niveau de la rangée annulaire d'aubes rotoriques (124) du niveau de compression amont (134).

10. Compresseur (104) selon la revendication 9, **caractérisé en ce que** le système de dégivrage (142) chevauche axialement la rangée annulaire d'aubes rotoriques (124) du niveau de compression amont (134) et la rangée annulaire d'aubes statoriques (150) à orientation fixe disposée entre les aubes rotoriques (124) et les aubes à orientation réglable (128) du niveau de compression amont (134).

11. Compresseur (104) selon l'une des revendications 1 à 10, **caractérisé en ce que** le carter annulaire (32) comporte une paroi monobloc (33) s'étendant de l'entrée à la sortie du compresseur (104) et/ou sur la majorité de la longueur axiale du compresseur (104).

12. Turboréacteur comprenant un compresseur, **caractérisé en ce que** le compresseur (4 ; 104) est conforme à l'une des revendications 1 à 11, éventuellement le turboréacteur (2) comporte en outre un compresseur haute-pression (6) en aval dudit compresseur (104), le compresseur haute-pression étant conforme à l'une des revendications 1 à 11.

13. Turboréacteur (2) selon la revendication 12, **caractérisée en ce qu'**il comprend une soufflante (16; 116) qui est disposée axialement en regard de la rangée annulaire d'aubes rotoriques (124) du niveau de compression amont (134), ladite rangée et la soufflante (116) étant contrarotative et/ou la soufflante (116) tournant à une vitesse de rotation inférieure à celle des aubes rotoriques (124) du niveau de compression amont.

## Patentansprüche

1. Kompressor (104) für eine axiale Turbomaschine (2), wobei der Kompressor (104) eine ringförmige Ader (17), ein ringförmiges Gehäuse (32), das die ringförmige Ader (17) begrenzt, und zwei Kompressionsstufen (134) umfasst, die innerhalb der ringförmigen Ader (17) ausgebildet sind, mit einem stromaufwärtigen Verdichtungsgrad (134) mit einer ringförmigen Anordnung von einstellbaren Ausrichtungsschaufeln (128), die mit dem ringförmigen Gehäuse (32) verbunden sind, wobei der Kompressor eine ringförmige Anordnung von stromabwärtigen Schaufeln umfasst, die durch Statorschaufeln mit fester Ausrichtung gebildet sind, wobei die Schaufeln den Ausgang des Kompressors (4; 104) bilden und wobei der Kompressor eine Trenndüse (152) umfasst
und **dadurch gekennzeichnet ist, dass**
der stromaufwärts verlaufende Verdichtungsgrad (134) eine ringförmige Anordnung von Rotorschaufeln (124) beinhaltet, die stromaufwärts der Schaufeln (28; 128) mit einstellbarer Ausrichtung dieses Grades (134) und einer ringförmigen Anordnung von fest ausgerichteten Statorschaufeln (150), die zwischen den Rotorschaufeln (124) und den einstellbaren Ausrichtungsschaufeln (128) angeordnet sind,
wobei der Verdichter genau fünf Schaufelreihen (124; 128; 150) umfasst und
die ringförmige Reihe von Rotorschaufeln (124) des stromaufwärts gelegenen Verdichtungsgrades (134) innerhalb der Trenndüse (152) so angeordnet ist, dass die Trenndüse (152) eine Trennwand (154) und eine Trennkante (156) umfasst und dass die ringförmige Reihe
von Rotorschaufeln (124) die erste Schaufelreihe stromabwärts der Trennkante (156) ist.

2. Kompressor (104) nach Anspruch 1, **dadurch gekennzeichnet, dass** die eine ringförmige Reihe von Rotorschaufeln (124) eine erste Rotoranordnung ist, wobei der Kompressor (4; 104) höchstens eine weitere ringförmige Anordnung von Rotorschaufeln umfasst.

3. Kompressor (104) nach einem der Ansprüche 1 oder 2, **dadurch gekennzeichnet, dass** er einen Rotor (12) mit einer Schaufeltrommel (38) umfasst, der sich axial entlang jeder der Schaufelreihen (124; 128; 150) des Kompressors (104) erstreckt.

4. Kompressor (104) nach Anspruch 3, **dadurch gekennzeichnet, dass** die Trommel (38) aus einem Block besteht.

5. Kompressor (104) nach einem der Ansprüche 3 oder 4, **dadurch gekennzeichnet, dass** sich die Trommel (38) über den größten Teil der axialen Länge des Kompressors, insbesondere des ringförmigen Gehäuses (32) erstreckt.

6. Kompressor (104) nach einem der Ansprüche 1 bis 5, **dadurch gekennzeichnet, dass** er ein transsonischer Kompressor (4; 104) ist.

7. Kompressor (104) nach einem der Ansprüche 1 bis 6, **dadurch gekennzeichnet, dass** er ein Niederdruckkompressor (4; 104) ist.

8. Kompressor (104) nach Anspruch 7, **dadurch gekennzeichnet, dass** die Schaufeln (24; 26; 28; 30; 124; 128; 130) radial durch die ringförmige Ader (17) verlaufen.

9. Kompressor (104) nach einem der Ansprüche 1 bis 8, **dadurch gekennzeichnet, dass** er ein Enteisungs-System (142) umfasst, das axial am Grad der ringförmigen Anordnung von Rotorschaufeln (124) des stromaufwärts gelegenen Kompressionsgrades (134) angeordnet ist

10. Kompressor (104) nach Anspruch 9, **dadurch gekennzeichnet, dass** das Enteisungs-System (142) die ringförmige Anordnung von Rotorschaufeln (124) des stromaufwärts liegenden Verdichtungsgrades (134) und die ringförmige Anordnung von fest ausgerichteten Statorschaufeln (150), die zwischen den Rotorschaufeln (124) und den verstellbaren Ausrichtungsschaufeln (128) des stromaufwärts gelegenen Verdichtungsgrades (134) angeordnet sind, axial überlappt.

11. Kompressor (104) nach einem der Ansprüche 1 bis 10, **dadurch gekennzeichnet, dass** das ringförmige Gehäuse (32) eine Monoblockwand (33) aufweist, die sich vom Einlass bis zum Auslass des Kompressors (104) und/oder über den Großteil der axialen Länge des Kompressors (104) erstreckt.

12. Strahlturbine mit einem Kompressor, **dadurch gekennzeichnet, dass** der Kompressor (4; 104) einem der Ansprüche 1 bis 11 entspricht, optional umfasst die Strahlturbine (2) ferner einen Hochdruckkompressor (6) stromabwärts des genannten Kompressors (104), wobei der Hochdruckkompressor einem der Ansprüche 1 bis 11 entspricht.

13. Strahlturbine (2) nach Anspruch 12, **dadurch gekennzeichnet, dass** sie ein Gebläse (16; 116) umfasst, das axial in 5 Flächen der ringförmigen Anordnung von Rotorschaufeln (124) des Kompressionsgrades stromaufwärts angeordnet ist, wobei die Anordnung und der Lüfter (116) gegenläufig sind und/oder der Lüfter (116) sich mit einer Drehzahl dreht, die niedriger ist als die der Rotorschaufeln (124) des stromaufwärts liegenden Verdichtungsgrades.

## Claims

1. A compressor (104) for an axial turbomachine (2), the compressor (104) comprising an annular passage (17), an annular housing (32) defining the annular passage (17), and two compression stages (134) formed inside the annular passage (17), including an upstream compression stage (134) with an annular row of blades (128) with adjustable orientation connected to the annular housing (32), the compressor comprising an annular row of downstream blades formed by fixed orientation stator blades, said blades forming the outlet of the compressor (4; 104), the compressor comprising a separation nozzle (152) and being
**characterised in that**
the upstream compression stage (134) comprises an annular row of rotor blades (124) disposed upstream of the blades (28; 128) with adjustable orientation of said stage (134) and an annular row of stator blades (150) with fixed orientation disposed between the rotor blades (124) and the blades (128) with adjustable orientation,
the compressor comprising exactly five rows of blades (124; 128; 150), and
the annular row of rotor blades (124)
of the upstream compression stage (134) being disposed inside the separation nozzle (152) in such a way that the separation nozzle (152) comprises a separation partition (154) and a separation edge (156) and that the annular row
of rotor blades (124) is the first row of blades downstream of the separation edge (156).

2. The compressor (104) according to claim 1, **characterised in that** the annular row of rotor blades (124) is a first rotor row, the compressor (4; 104) comprising at most one further annular row of rotor blades.

3. The compressor (104) according to any one of claims 1 or 2 **characterised in that** it comprises a rotor (12) with a bladed drum (38) extending axially along each of the blade rows (124; 128; 150) of the compressor (104).

4. The compressor (104) according to claim 3, **characterised in that** the drum (38) is monobloc.

5. The compressor (104) according to any one of claims 3 or 4, **characterised in that** the drum (38) extends over the majority of the axial length of the compressor, in particular the annular housing (32).

6. The compressor (104) according to any one of claims 1 to 5, **characterised in that** it is a transonic compressor (4; 104).

7. The compressor (104) according to any one of claims 1 to 6, **characterised in that** it is a low-pressure compressor (4; 104).

8. The compressor (104) according to claim 7, **characterised in that** said blades (24;26; 28; 30; 124; 128; 130) pass radially through the annular passage (17).

9. The compressor (104) according to any one of claims 1 to 8, **characterised in that** it comprises a defrosting system (142) disposed axially at the level of the annular row of rotor blades (124) of the upstream compression stage (134).

10. The compressor (104) according to claim 9, **characterised in that** the defrosting system (142) axially overlaps the annular row of rotor blades (124) of the upstream compression stage (134) and the annular row of stator blades (150) with fixed orientation disposed between the rotor blades (124) and the blades (128) with adjustable orientation of the upstream compression stage (134).

11. The compressor (104) according to any one of claims 1 to 10, **characterised in that** the annular housing (32) has a monobloc wall (33) extending from the inlet to the outlet of the compressor (104) and/or on the majority of the axial length of the compressor (104).

12. A turbojet engine comprising a compressor, **characterised in that** the compressor (4; 104) conforms to any one of claims 1 to 11, optionally the turbojet engine (2) also has a high-pressure compressor (6) downstream of said compressor (104), the high-pressure compressor conforming to any one of claims 1 to 11.

13. The turbojet engine (2) according to claim 12, **characterised in that** it comprises a blower (16; 116) which is disposed axially with regard to the annular row of rotor blades (124) of the upstream compression stage (134), said row and the blower (116) being counter-rotating and/or the blower (116) rotating at a rotational speed lower than that of the rotor blades (124) of the upstream compression stage.
